# EUROPÄISCHE PATENTANMELDUNG

(11) **EP 3 290 649 A1**
(43) Veröffentlichungstag der Anmeldung: **07.03.2018**
(21) Anmeldenummer: 16187322.9
(22) Anmeldetag: 06.09.2016
(51) Int. Cl.: F01D 11/02, F01D 11/12, F04D 29/08, F02C 7/28, F16J 15/16

(54) **EINLAUFBELAG UND VERFAHREN ZUM HERSTELLEN EINES EINLAUFBELAGS ZUM ABDICHTEN EINES SPALTES ZWISCHEN EINEM ROTOR UND EINEM STATOR EINER STRÖMUNGSMASCHINE**

(71) Anmelder: MTU Aero Engines AG, 80995 München (DE)
(72) Erfinder: Böck, Alexander, 82288 Kottgeisering (DE)

(57) **Zusammenfassung**

Die Erfindung betrifft ein Verfahren zum Herstellen eines Einlaufbelags (14) zum Abdichten eines Spaltes zwischen einem Rotor (12) und einem Stator einer Strömungsmaschine, wobei der Einlaufbelag (14) zumindest bereichsweise eine Stützstruktur (18) aufweist, wobei die Stützstruktur (18) durch ein additives Fertigungsverfahren als Stabwerk und/oder Gitterstruktur ausgebildet wird und dass Hohlräume (26) in der Stützstruktur (18) zumindest teilweise mit einem Füllstoff befüllt werden.. Die Erfindung betrifft weiterhin einen Einlaufbelag (14) zum Abdichten eines Spaltes zwischen einem Rotor (12) und einem Stator einer Strömungsmaschine, wobei der Einlaufbelag (14) zumindest bereichsweise eine Stützstruktur (18) aufweist, die durch ein additives Fertigungsverfahren als Stabwerk und/oder Gitterstruktur ausgebildet ist, wobei Hohlräume (26) in der Stützstruktur (18) zumindest teilweise mit einem Füllstoff befüllt sind.

## Beschreibung

Die Erfindung betrifft ein Verfahren zum Herstellen eines Einlaufbelags zum Abdichten eines Spaltes zwischen einem Rotor und einem Stator einer Strömungsmaschine. Die Erfindung betrifft weiterhin einen Einlaufbelag zum Abdichten eines Spaltes zwischen einem Rotor und einem Stator einer Strömungsmaschine, einen Dichtring mit wenigstens einem Einlaufbelag sowie eine Strömungsmaschine mit wenigstens einem Einlaufbelag, der zum Abdichten eines Spaltes zwischen einem Rotor und einem Stator der Strömungsmaschine angeordnet ist.

Bei Strömungsmaschinen wie etwa thermischen Gasturbinen oder Flugtriebwerken dreht sich ein Rotor mit einer Vielzahl von Laufschaufeln gegenüber einem Stator, der bezüglich eines den Rotor umgebenden Gehäuses ortsfest ist. Um einen hohen Wirkungsgrad zu erzielen, soll möglichst das gesamte Arbeitsfluid der Strömungsmaschine den vorgesehenen Strömungspfad durchströmen und die Laufschaufeln beaufschlagen. Entsprechend soll vermieden werden, dass zwischen dem Rotor und dem Stator Arbeitsfluid vorbeiströmen kann, da dies zu einer Verringerung des Wirkungsgrads der Strömungsmaschine führt. Zu diesem Zweck sind äußere Luftdichtungen, sogenannte Outer-Air-Seals (OAS), bzw. innere Luftdichtungen, sogenannte Inner-Air-Seals (IAS), zwischen Rotor und Stator angeordnet, so dass unter allen Betriebsbedingungen möglichst geringe Strömungsverluste an Arbeitsfluid auftreten. Die Luftdichtungen umfassen dabei in der Regel mehrere kreisringförmig angeordnete Einlaufbeläge mit einer Hohlräume umfassenden Stützstruktur, die üblicherweise als sogenannte Honigwabenstruktur ausgebildet ist. Während des Betriebs der Strömungsmaschine bildet die Stützstruktur die Einlauf- bzw. Dichtfläche für den Rotor. Der Rotor wird dazu üblicherweise mit Dichtfinnen versehen und reibt bei Kontakt Material der Stützstruktur ab.

Zur Leistungssteigerung sollen derartige Einlaufbeläge generativ bzw. additiv hergestellt werden. Dabei stellt allerdings das additive Herstellen gängiger Stützstrukturen ein Problem dar, da deren normalerweise vorgesehene Wandstärken mit generativen Fertigungsverfahren nicht oder nur eingeschränkt darstellbar sind, was im späteren Betrieb zu Dichtigkeits-, Stabilitäts- und Einlaufproblemen führen kann.

Aufgabe der vorliegenden Erfindung ist es, ein Verfahren zu schaffen, welches das Herstellen eines Einlaufbelags mit verbesserten Eigenschaften ermöglicht. Weitere Aufgaben der Erfindung bestehen darin, einen Einlaufbelag mit verbesserten Eigenschaften sowie einen Dichtring und eine Strömungsmaschine mit wenigstens einem derartigen Einlaufbelag bereitzustellen.

Die Aufgaben werden erfindungsgemäß durch ein Verfahren mit den Merkmalen des Patentanspruchs 1, durch einen Einlaufbelag mit den Merkmalen des Patentanspruchs 7, durch einen Dichtring mit den Merkmalen des Patentanspruchs 12 sowie durch eine Strömungsmaschine mit den Merkmalen des Patentanspruchs 14 gelöst. Vorteilhafte Ausgestaltungen mit zweckmäßigen Weiterbildungen der Erfindung sind in den jeweiligen Unteransprüchen angegeben, wobei vorteilhafte Ausgestaltungen jedes Erfindungsaspekts als vorteilhafte Ausgestaltungen der jeweils anderen Erfindungsaspekte und umgekehrt anzusehen sind.

Ein erster Aspekt der Erfindung betrifft ein Verfahren zum Herstellen eines Einlaufbelags zum Abdichten eines Spaltes zwischen einem Rotor und einem Stator einer Strömungsmaschine, wobei der Einlaufbelag zumindest bereichsweise eine Stützstruktur aufweist. Dabei ist es erfindungsgemäß vorgesehen, dass die Stützstruktur als Stabwerk und/oder Gitterstruktur ausgebildet wird und dass Hohlräume in der Stützstruktur zumindest teilweise mit einem Füllstoff befüllt werden. Indem die Stützstruktur als Stabwerk und/oder Gitterstruktur ausgebildet ist, bildet die Stützstruktur ein Tragwerk, das einerseits besonders stabil ist, andererseits aber vergleichsweise leicht ist und nur einen geringen mechanischen Widerstand beim Einlaufen des Rotors erzeugt, wodurch eine Beschädigung des Rotors zuverlässig verhindert wird. Aufgrund des teilweise oder vollständigen Befüllens mit dem Füllstoff kann zudem eine höhere Dichtwirkung im Vergleich beispielsweise zu konventionellen Wabendichtungen erzielt und aufrechterhalten werden, da ein Durchströmen der Stützstruktur vorteilhaft verhindert wird, selbst wenn die Stützstruktur beim Einlaufen eines Rotors teilweise abgetragen wird. Damit wird das Einlaufverhalten des Einlaufbelags zusätzlich verbessert. Das Befüllen kann dabei grundsätzlich während der Fertigung der Stützstruktur und/oder im Anschluss an die Fertigung erfolgen, wobei die zu befüllenden Hohlräume der Stützstruktur im letzten Fall vorzugsweise untereinander und mit der Umgebung in Verbindung stehen bzw. offenporig ausgebildet sind. Als Füllstoffe eignen sich in Abhängigkeit des späteren Einsatzzweckes verschiedene Werkstoffe wie beispielsweise Silikone, die sich insbesondere für Niedertemperaturanwendungen in Verdichtern oder dergleichen eignen, oder niederfeste Keramikmaterialien, die insbesondere für Hochtemperaturanwendungen in Turbinen oder dergleichen geeignet sind. Vorzugsweise besitzt der Füllstoff eine geringere Dichte als der Werkstoff der Stützstruktur.

In einer vorteilhaften Ausgestaltung der Erfindung ist vorgesehen, dass wenigstens zwei vorzugsweise fluidundurchlässige Wände hergestellt werden, zwischen welchen die Stützstruktur hergestellt wird. Mit anderen Worten ist es vorgesehen, dass die stabwerk- bzw. gitterförmige Stützstruktur additiv zwischen zwei oder mehr fluidundurchlässigen Wänden hergestellt wird. Die Wände können unabhängig voneinander ebenfalls additiv oder anderweitig hergestellt werden. Grundsätzlich ist es möglich, zunächst die Wände herzustellen und anschließend die Stützstruktur aufzubauen. Ebenfalls möglich ist es, zunächst die Stützstruktur aufzubauen und anschließend mit den Wänden zu versehen. Weiterhin kann es vorgesehen sein, die Stützstruktur und die Wände gemeinsam aufzubauen. Durch die Wände wird die dazwischen liegende Stützstruktur vorteilhaft stabilisiert, so dass die Stützstruktur mit vergleichsweise geringem Materialaufwand bei gleicher oder höherer Steifigkeit und Stabilität als konventionell hergestellte Stützstrukturen hergestellt werden kann. Weiterhin erleichtern die Wände das Befüllen der Hohlräume mit dem Füllstoff, da dieser an den Rändern der Stützstruktur nicht herausgedrückt werden kann.

Weitere Vorteile ergeben sich, wenn der Füllstoff nach dem Befüllen ausgehärtet wird. Dies erlaubt die Verwendung eines flüssigen bzw. fließfähigen Füllstoffs, der erst nach dem Befüllen durch Aushärten in eine feste Form überführt wird. Beispielsweise kann als Füllstoff ein Präpolymer verwendet und nach dem Befüllen auspolymerisiert werden. Grundsätzlich kann der Füllstoff auch aus mehreren, gegebenenfalls nur teilweise härtbaren Komponenten bestehen bzw. einen Werkstoffverbund bilden. Dies erleichtert das Befüllen der Hohlräume und stellt sicher, dass der Füllstoff nach dem Befüllen sicher in den Hohlräumen gehalten wird. Alternativ oder zusätzlich ist es vorgesehen, dass der Füllstoff stoffschlüssig mit der Stützstruktur verbunden wird. Hierdurch wird der Füllstoff besonders betriebssicher in den Hohlräumen der Stützstruktur gehalten und bildet einen Verbund mit dieser.

Besondere Vorteile ergeben sich, wenn ein Füllstoff verwendet wird, welcher eine geringere Härte und/oder Dichte und/oder Abriebfestigkeit als die Stützstruktur besitzt. Hierdurch erzeugt der Füllstoff einen vernachlässigbar kleinen mechanischen Widerstand beim Einlaufen des Rotors, wodurch eine Beschädigung des Rotors besonders zuverlässig verhindert wird.

Weitere Vorteile ergeben sich, wenn zumindest die Stützstruktur durch ein additives Fertigungsverfahren hergestellt wird. Als additive Fertigungsverfahren eignen sich beispielsweise selektive Laserschmelzverfahren (selective laser melting, SLM) und/oder selektive Lasersinterverfahren. Vorzugsweise wird bei der additiven Fertigung von einer Hochdruckseite zu einer Niederdruckseite des Einlaufbelags hin oder von einer Niederdruckseite zu einer Hochdruckseite des Einlaufbelags hin aufgebaut. Mit anderen Worten ist es erfindungsgemäß vorgesehen, dass die Stützstruktur nicht in bezüglich der Einbaulage des Einlaufbelags radialer Richtung, das heißt von unten nach oben, oder in Umfangsrichtung, sondern in bezüglich der Einbaulage des Einlaufbelags axialer Richtung, das heißt quer zur späteren Einbaulage bzw. von seiner stromaufliegenden Hochdruckseite zu seiner stromabliegenden Niederdruckseite schichtweise aufgebaut wird, wobei grundsätzlich auch ein additiver Aufbau in umgekehrter axialer Richtung vorgesehen sein kann. Diese Aufbaurichtung erlaubt eine besonders flexible Einstellung der Geometrie und Wandstärke der Elemente, aus denen die Stützstruktur gebildet wird.

In einer weiteren vorteilhaften Ausgestaltung der Erfindung wird die Stützstruktur auf einem Träger aufgebaut. Der Träger, welcher auch als Substrat oder Dichtungsträger bezeichnet werden kann, kann seinerseits grundsätzlich additiv oder anderweitig hergestellt sein. Weiterhin kann der Träger kreisringförmig oder kreisringsegmentförmig ausgebildet sein und/oder in Umfangsrichtung eine zumindest im Wesentlichen konstante radiale Dicke besitzen. Hierdurch sind einerseits eine einfache und zuverlässige Anbindung der Stützstruktur an den Träger und andererseits eine einfache und zuverlässige Anbindung des Einlaufbelags an ein üblicherweise kreisförmiges Bauteil eines Gehäuses einer zugeordneten Strömungsmaschine sichergestellt.

Ein zweiter Aspekt der Erfindung betrifft einen Einlaufbelag zum Abdichten eines Spaltes zwischen einem Rotor und einem Stator einer Strömungsmaschine, wobei der Einlaufbelag zumindest bereichsweise eine Stützstruktur aufweist. Dabei ist es erfindungsgemäß vorgesehen, dass zumindest die Stützstruktur als Stabwerk und/oder Gitterstruktur ausgebildet ist und dass Hohlräume in der Stützstruktur zumindest teilweise mit einem Füllstoff befüllt sind. Indem die Stützstruktur als Stabwerk bzw. Gitterstruktur ausgebildet ist, bildet die Stützstruktur ein Tragwerk, das einerseits besonders stabil ist, andererseits aber vergleichsweise leicht ist und nur einen geringen mechanischen Widerstand beim Einlaufen des Rotors erzeugt, wodurch eine Beschädigung des Rotors zuverlässig verhindert wird. Aufgrund des zumindest teilweisen Befüllens der Hohlräume der Stützstruktur mit dem Füllstoff kann zudem eine höhere Dichtwirkung im Vergleich beispielsweise zu konventionellen Wabendichtungen erzielt und aufrechterhalten werden, da ein Durchströmen der Stützstruktur vorteilhaft verhindert wird, selbst wenn die Stützstruktur beim Einlaufen eines Rotors teilweise abgetragen wird. Damit wird das Einlaufverhalten des Einlaufbelags zusätzlich verbessert. Als Füllstoff kann beispielsweise ein niederfestes Material wie Silikon verwendet werden, das nach dem Vernetzen einen Verbund mit der Stützstruktur bildet. Alternativ oder zusätzlich können auch andere Füllstoffe bzw. Füllstoffmischungen verwendet werden, beispielsweise niederfeste Keramikwerkstoffe, die eine höhere Temperaturbeständigkeit als Silikone besitzen. Der Füllstoff verbessert die Dichtwirkung und bietet ebenfalls einen vernachlässigbar kleinen mechanischen Widerstand beim Einlaufen des Rotors.

In einer vorteilhaften Ausgestaltung der Erfindung ist vorgesehen, dass die Stützstruktur zwischen wenigstens zwei vorzugsweise fluidundurchlässigen Wänden angeordnet ist. Die Wände können unabhängig voneinander ebenfalls additiv oder anderweitig hergestellt sein. Durch die Wände wird die dazwischen liegende Stützstruktur vorteilhaft stabilisiert, so dass die Stützstruktur mit vergleichsweise geringem Materialaufwand bei gleicher oder höherer Steifigkeit und Stabilität als konventionell hergestellte Stützstrukturen hergestellt werden kann. Aufgrund des flächigen Abschlusses durch die vorzugsweise fluiddichten bzw. fluidundurchlässigen Wände wird zudem verhindert, dass Füllstoff aus den Hohlräumen der Stützstruktur austreten kann.

In einer vorteilhaften Ausgestaltung der Erfindung ist es vorgesehen, dass die Wände radial bezüglich einer Einbaulage des Einlaufbelags und/oder an einer Hochdruckseite und einer Niederdruckseite des Einlaufbelags und/oder an einer radialen Stufe der Stützstruktur ausgebildet sind. Hierdurch kann die mechanische Stabilität der Stützstruktur gezielt verbessert werden. Weiterhin kann das Herausdrücken des Füllstoffs gezielt verhindert werden.

Eine besonders hohe Dichtigkeit und eine weitere Verbesserung des Einlaufverhaltens des Einlaufbelags werden in weiterer Ausgestaltung dadurch erreicht, dass die Hohlräume der Stützstruktur vollständig mit dem Füllstoff befüllt sind. Hierdurch bildet der Einlaufbelag einen kompakten, hohlraumfreien Verbundkörper, so dass die Stützstruktur selbst im Fall eines Einlaufens von Dichtfinnen oder dergleichen stets eine fluidundurchlässige Einlauf- bzw. Dichtfläche ausbildet.

Ein dritter Aspekt der Erfindung betrifft einen Dichtring, welcher zum Abdichten eines Spaltes zwischen einem Rotor und einem Stator einer Strömungsmaschine anordenbar ist. Erfindungsgemäß ist es vorgesehen, dass der Dichtring aus wenigstens einem Einlaufbelag aufgebaut ist, der mittels eines Verfahrens gemäß dem ersten Erfindungsaspekt hergestellt und/oder gemäß dem zweiten Erfindungsaspekt ausgebildet ist. Die sich hieraus ergebenden Merkmale und deren Vorteile sind den vorhergehenden Beschreibungen des ersten und zweiten Erfindungsaspekts zu entnehmen.

In einer vorteilhaften Ausgestaltung der Erfindung ist der Dichtring als innere und/oder äußere Luftdichtung und/oder segmentiert ausgebildet ist. Hierdurch können die Vorteile des erfindungsgemäßen Einlaufbelags bzw. Dichtrings oder Dichtringsegments sowohl für Outer-Air-Seals (OAS) als auch für Inner-Air-Seals (IAS) realisiert werden, so dass entsprechend geringe Strömungsverluste unter allen Betriebsbedingungen einer zugeordneten Strömungsmaschine auftreten.

Ein vierter Aspekt der Erfindung betrifft eine Strömungsmaschine, insbesondere ein Flugtriebwerk, mit wenigstens einem Einlaufbelag, der zum Abdichten eines Spaltes zwischen einem Rotor und einem Stator der Strömungsmaschine angeordnet ist. Erfindungsgemäß ist der wenigstens eine Einlaufbelag mittels eines Verfahrens gemäß dem ersten Erfindungsaspekt hergestellt und/oder gemäß dem zweiten Erfindungsaspekt ausgebildet ist. Die sich hieraus ergebenden Merkmale und deren Vorteile sind den vorhergehenden Beschreibungen des ersten und zweiten Erfindungsaspekts zu entnehmen.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Dabei zeigt:
- Fig. 1: eine schematische Perspektivansicht eines Dichtrings;
- Fig. 2: eine schematische Schnittansicht des in Fig. 1 gezeigten Bereichs II;
- Fig. 3: eine schematische Perspektivansicht des in Fig. 1 gezeigten Bereichs II; und
- Fig. 4: eine weitere schematische Perspektivansicht des in Fig. 1 gezeigten Bereichs II.

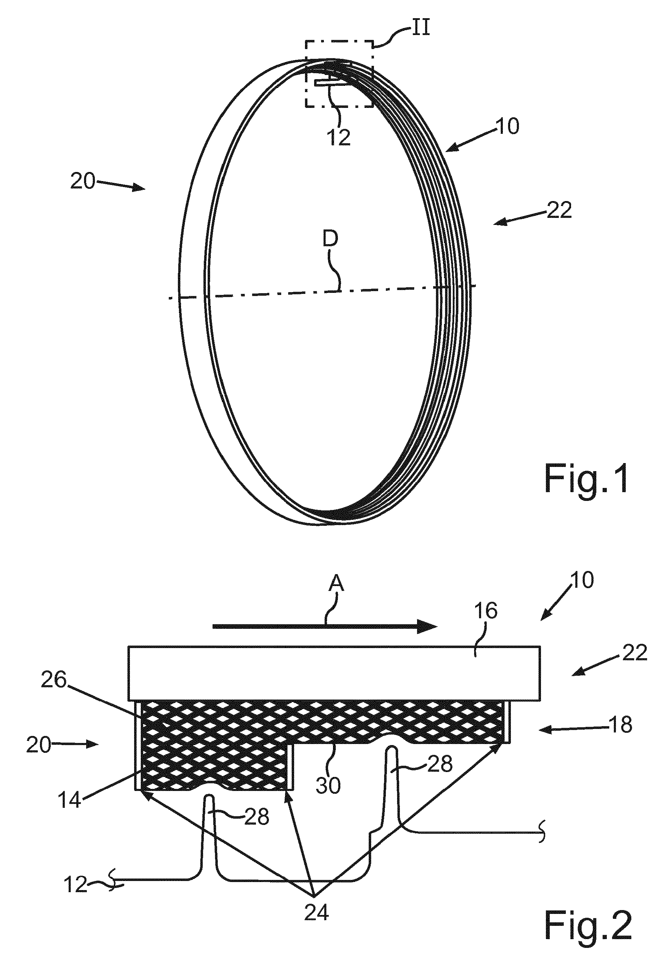

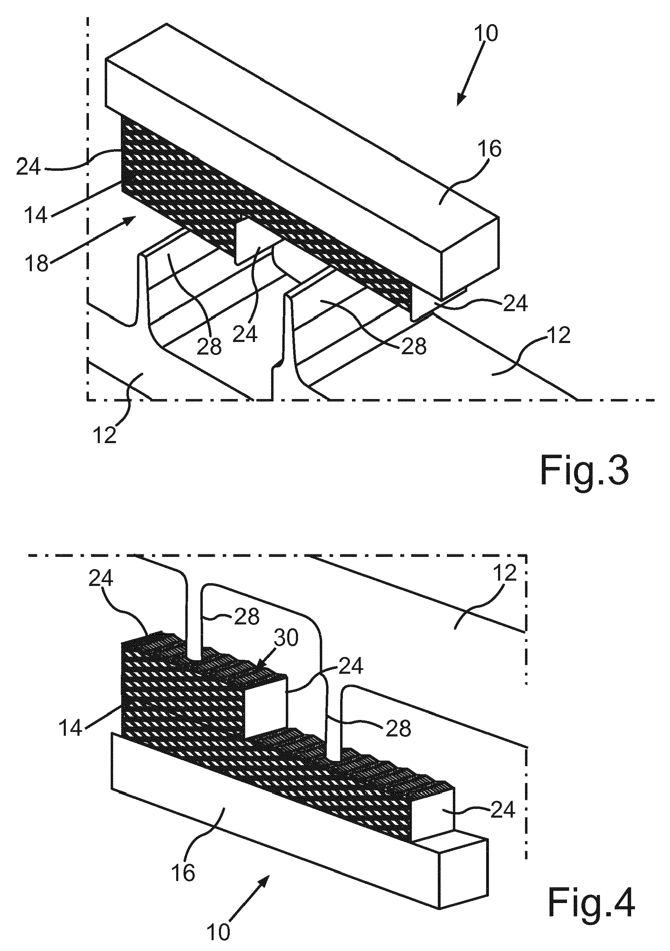

Fig. 1 zeigt eine schematische Perspektivansicht eines Dichtrings 10, der in einer Strömungsmaschine, beispielsweise in einer thermischen Gasturbine bzw. einem Flugtriebwerk, zur Abdichtung eines Spaltes zwischen einem Rotor 12 und einem Stator (nicht gezeigt) der Strömungsmaschine dient. Der Dichtring 10 ist dabei im gezeigten Ausführungsbeispiel als innere Luftdichtung (inner air seal, IAS) eines Hochdruckverdichters ausgebildet. Der Dichtring 10 wird im Folgenden in Zusammenschau mit Fig. 2 bis 4 erläutert werden, in welchen der in Fig. 1 gekennzeichnete Bereich II schematisch aus verschiedenen Blickwinkeln dargestellt ist.

Der Dichtring 10 besteht im vorliegenden Beispiel aus einem einzigen Einlaufbelag 14, der einen kreisringsförmigen Träger 16 umfasst, auf welchem eine gitterförmige Stützstruktur 18 additiv mittels eines selektiven Laserschmelzverfahrens aufgebaut ist. Alternativ kann der Dichtring 10 auch mit zwei oder mehr Einlaufbelägen 14 bzw. segmentiert hergestellt werden. Die Aufbaurichtung ist in Fig. 2 mit Pfeil A gekennzeichnet. Man erkennt, dass die Stützstruktur 18 bezüglich einer Drehachse D des Rotors 12 schichtweise bzw. durch ein additives Fertigungsverfahren von einer stromaufliegenden Niederdruckseite 20 zu einer stromabliegenden Hochdruckseite 22 hin aufgebaut wird, wobei auch eine umgekehrte Aufbaurichtung denkbar ist. Als additives Fertigungsverfahren eignen sich beispielsweise selektive Laserschmelzverfahren (selective laser melting, SLM) und/oder selektive Lasersinterverfahren. An den der Niederdruckseite 20 und der Hochdruckseite 22 zugewandten Endbereichen der Stützstruktur 18 befinden sich radial angeordnete, fluidundurchlässige Wände 24, zwischen welchen sich die Stützstruktur 18 erstreckt. Eine weitere Wand 24 ist an einer radialen Stufe in einem mittleren Bereich der Stützstruktur 18 angeordnet. Durch den Aufbau der Stützstruktur 18 wird ein stabiles Stabwerk erzeugt, welches einen nur sehr geringen mechanischen Widerstand beim Einlaufen von Dichtfinnen 28 des Rotors 12 in den Einlaufbelag 14 erzeugt. Hohlräume 26 der Stützstruktur 18 sind derart gestaltet, dass sie während der Herstellung teilweise oder vollständig mit einem niederfesten Füllstoff wie beispielsweise Silikon aufgefüllt werden können, das nach dem Vernetzen einen Verbundwerkstoff mit der Stützstruktur 18 bildet. Alternativ oder zusätzlich können auch andere Füllstoffe wie beispielsweise niederfestes Keramikmaterial verwendet werden, beispielsweise falls die späteren Betriebsbedingungen eine höhere Temperaturstabilität erfordern. Der Füllstoff erzeugt damit die Dichtwirkung der Stützstruktur 18 bzw. des Einlaufbelags 14, setzt dabei aber dem Rotor 12 ebenfalls nur einen vernachlässigbar kleinen Widerstand beim Einlaufen entgegen, so dass eine Beschädigung der Dichtfinnen 28 zuverlässig vermieden wird. Eine dem Rotor 12 zugewandte Einlauffläche 30 der Stützstruktur 18 ist durch die Befüllung der Hohlräume 26 der Stützstruktur 18 mit dem Füllstoff ebenfalls fluidundurchlässig ausgebildet.

Die Stützstruktur 18 kann durch ihren stabwerkförmigen Aufbau im Vergleich zu herkömmlichen Honigwabenstrukturen mit geringem Materialaufwand bei gleicher oder höherer Steifigkeit aufgebaut werden, wodurch das Einlaufverhalten verbessert wird. Durch das Auffüllen der Hohlräume 26 der Stützstruktur 18 mit einem Füllstoff oder mehreren Füllstoffen und die dadurch entstehende fluidundurchlässige Einlauffläche 30 wird eine besonders hohe Dichtwirkung des Einlaufbelags 14 erreicht, da im Vergleich zu herkömmlichen Honigwabenstrukturen keine tiefen bzw. voluminösen Hohlräume 26 existieren und selbst beim Einlaufen des Rotors 12 nicht entstehen können. Stattdessen bildet sich auch nach einem Einlaufen des Rotors 12 eine weiterhin geschlossene Einlauffläche 30 ohne Hohlräume. Durch das geringe Gewicht der stabwerk- bzw. gitterförmigen Stützstruktur 18 kann die zusätzliche Masse des Füllstoffs teilweise oder vollständig kompensiert werden, so dass der Einlaufbelag 14 gegenüber einer konventionellen Honigwabendichtung zumindest massenneutral ist.

### Bezugszeichenliste:

- 10: Dichtring
- 12: Rotor
- 14: Einlaufbelag
- 16: Träger
- 18: Stützstruktur
- 20: Niederdruckseite
- 22: Hochdruckseite
- 24: Wand
- 26: Hohlräume
- 28: Dichtfinnen
- 30: Einlauffläche
- A: Aufbaurichtung
- D: Drehachse

## Patentansprüche

1. Verfahren zum Herstellen eines Einlaufbelags (14) zum Abdichten eines Spaltes zwischen einem Rotor (12) und einem Stator einer Strömungsmaschine, wobei der Einlaufbelag (14) zumindest bereichsweise eine Stützstruktur (18) aufweist,
**dadurch gekennzeichnet, dass**
die Stützstruktur (18) als Stabwerk und/oder Gitterstruktur ausgebildet wird und dass Hohlräume (26) in der Stützstruktur (18) zumindest teilweise mit einem Füllstoff befüllt werden.

2. Verfahren nach Anspruch 1,
**dadurch gekennzeichnet, dass**
wenigstens zwei vorzugsweise fluidundurchlässige Wände (24) hergestellt werden, zwischen welchen die Stützstruktur (18) hergestellt wird.

3. Verfahren nach Anspruch 1 oder 2,
**dadurch gekennzeichnet, dass**
der Füllstoff nach dem Befüllen ausgehärtet und/oder stoffschlüssig mit der Stützstruktur (18) verbunden wird.

4. Verfahren nach einem der Ansprüche 1 bis 3,
**dadurch gekennzeichnet, dass**
ein Füllstoff verwendet wird, welcher eine geringere Härte und/oder Dichte und/oder Abriebfestigkeit als die Stützstruktur (18) besitzt.

5. Verfahren nach einem der Ansprüche 1 bis 4,
**dadurch gekennzeichnet, dass**
zumindest die Stützstruktur (18) durch ein additives Fertigungsverfahren hergestellt wird.

6. Verfahren nach einem der Ansprüche 1 bis 5,
**dadurch gekennzeichnet, dass**
die Stützstruktur (18) auf einem Träger (16) aufgebaut wird.

7. Einlaufbelag (14) zum Abdichten eines Spaltes zwischen einem Rotor (12) und einem Stator einer Strömungsmaschine, wobei der Einlaufbelag (14) zumindest bereichsweise eine Stützstruktur (18) aufweist,
**dadurch gekennzeichnet, dass**
zumindest die Stützstruktur (18) als Stabwerk und/oder Gitterstruktur ausgebildet ist und dass Hohlräume (26) in der Stützstruktur (18) zumindest teilweise mit einem Füllstoff befüllt sind.

8. Einlaufbelag (14) nach Anspruch 7,
**dadurch gekennzeichnet, dass**
die Stützstruktur (18) zwischen wenigstens zwei vorzugsweise fluidundurchlässigen Wänden (24) angeordnet ist.

9. Einlaufbelag (14) nach Anspruch 7 oder 8,
**dadurch gekennzeichnet, dass**
die Wände (24) radial bezüglich einer Einbaulage des Einlaufbelags (14) und/oder an einer Hochdruckseite (22) und einer Niederdruckseite (20) des Einlaufbelags (14) und/oder an einer radialen Stufe der Stützstruktur (18) ausgebildet sind.

10. Einlaufbelag (14) nach einem der Ansprüche 7 bis 10,
**dadurch gekennzeichnet, dass**
die Hohlräume (26) der Stützstruktur (18) vollständig mit dem Füllstoff befüllt sind.

11. Einlaufbelag (14) nach einem der Ansprüche 7 bis 11,
**dadurch gekennzeichnet, dass**
die Stützstruktur (18) eine dem Rotor (12) zuzuwendende fluidundurchlässige Einlauffläche (30) aufweist.

12. Dichtring (10), welcher zum Abdichten eines Spaltes zwischen einem Rotor (12) und einem Stator einer Strömungsmaschine anordenbar ist,
**dadurch gekennzeichnet, dass**
dieser aus wenigstens einem Einlaufbelag (14) aufgebaut ist, der mittels eines Verfahrens nach einem der Ansprüche 1 bis 6 hergestellt und/oder gemäß einem der Ansprüche 7 bis 11 ausgebildet ist.

13. Dichtring (10) nach Anspruch 12,
**dadurch gekennzeichnet, dass**
dieser als innere und/oder äußere Luftdichtung und/oder segmentiert ausgebildet ist.

14. Strömungsmaschine, insbesondere Flugtriebwerk, mit wenigstens einem Einlaufbelag (14), der zum Abdichten eines Spaltes zwischen einem Rotor (12) und einem Stator der Strömungsmaschine angeordnet ist,
**dadurch gekennzeichnet, dass**
der wenigstens eine Einlaufbelag (14) mittels eines Verfahrens nach einem der Ansprüche 1 bis 6 hergestellt und/oder gemäß einem der Ansprüche 7 bis 11 ausgebildet ist.
